Europäisches Patentamt

European Patent Office

Office européen des brevets

(19)

(11) Veröffentlichungsnummer: **0 065 155**
**B1**

(12)

# EUROPÄISCHE PATENTSCHRIFT

(45) Veröffentlichungstag der Patentschrift:
**17.09.86**

(51) Int. Cl.⁴: **G 21 C 17/00**

(21) Anmeldenummer: **82103683.7**

(22) Anmeldetag: **29.04.82**

(54) **Verfahren und Anordnung zur Feststellung und Meldung von Kühlungsstörungen in einem Brennelement eines Reaktorkerns.**

(30) Priorität: 13.05.81 DE 3119045
23.11.81 DE 3146374

(43) Veröffentlichungstag der Anmeldung:
**24.11.82 Patentblatt 82/47**

(45) Bekanntmachung des Hinweises auf die Patenterteilung:
**17.09.86 Patentblatt 86/38**

(84) Benannte Vertragsstaaten:
**BE DE FR GB IT NL**

(56) Entgegenhaltungen:
**CA - A - 1 083 268**
**DE - A - 2 307 064**
**DE - A - 2 814 050**
**FR - A - 1 509 052**
**FR - A - 1 591 209**
**GB - A - 2 073 411**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Holick, Anton, Dipl.-Phys., Steinstrasse 10, D-5060 Bergisch Gladbach 1 (DE)**

(74) Vertreter: **Mehl, Ernst, Dipl.-Ing. et al, Postfach 22 01 76, D-8000 München 22 (DE)**

# Beschreibung

Die vorliegende Erfindung betrifft ein Verfahren und eine Anordnung zur Feststellung und Meldung von Kühlungsstörungen in einem Brennelement eines Reaktorkerns, insbesondere von natriumgekühlten schnellen Brutreaktoren nach dem Oberbegriff des Anspruchs 1, wie im Prinzip aus der CA-A-1 083 268 bekannt. In natriumgekühlten schnellen Brutreaktoren sind verschiedene Kühlungsstörungen im Reaktorkern denkbar, die zur Vermeidung von grösseren Schäden möglichst schnell erkannt werden sollen. Bei einer Kühlungsstörung, beispielsweise dem teilweisen oder ganzen Verstopfen eines von flüssigem Natrium durchflossenen Kanals in einem Brennelement oder dem Auftreten von grösseren Gasblasen in dem Kühlmittel, kann es zu einer Überhitzung des Brennstoffes und damit zu einer mehr oder weniger starken Beschädigung des betroffenen Brennelementes kommen. Zur frühzeitigen Feststellung von solchen Kühlungsstörungen wird bisher die Kühlmitteltemperatur am Brennelementausgang gemessen und mit einem Sollwert verglichen. Überschreitet die Abweichung der Ausgangstemperatur vom Sollwert eine bestimmte Grösse, so wird eine Kühlungsstörung unterstellt und eine entsprechende Fehlermeldung ausgegeben, bzw. gegebenenfalls ein Abschalten des Reaktors ausgelöst. Das Hauptproblem bei diesem Verfahren sind die immer vorhandenen Schwankungen der Kühlmittelaustrittstemperatur, das sogenannte Rauschen des Messwertes, welches die Empfindlichkeit dieses Verfahrens einschränkt. Entweder muss nämlich die Ansprechschwelle sehr hoch gesetzt werden, damit auch bei den statistisch auftretenden Spitzen im Rauschspektrum kein Fehlalarm ausgelöst wird, oder man muss durch zeitliche Integration der Messwerte eine Glättung vornehmen, was auf Grund der Zeitkonstanten zu verzögerten Fehlermeldungen und bei transienten Vorgängen zu Verfälschungen führt.

Über ein verbessertes Verfahren zur Verringerung des Rauschens in dem Messwert der Kühlmittelausgangstemperatur wurde auf dem Specialists Meeting on Reactor Noise (SMORN II) in Gatlinburg, Tennessee (USA), 1977 von M. Edelmann unter dem Thema «Noise and DC Balanced Outlet Temperature Signals for Monitoring Coolant Flow in LMFBR Fuel Elements» berichtet. Bei diesem Verfahren wird versucht, die Schwankungen der Kühlmittelaustrittstemperatur durch weitere Messungen und Korrekturen zu kompensieren, um die Empfindlichkeit und Ansprechzeit des Kühlungs-Überwachungssystems zu verbessern. Dieses bekannte Verfahren kompensiert tatsächlich unter Zuhilfenahme eines thermohydraulischen Modells schon einen erheblichen Teil der Schwankungen, ist jedoch vornehmlich für stationären Betrieb geeignet, da einige Parameter als konstant eingegeben werden. Ein Driften dieser Parameter führt u.U. zu Fehlmeldungen, wenn die Ansprechschwelle für den Alarm nicht hinreichend hoch gewählt wird.

Die Überwachungsfunktion wird ausschliesslich von der Kühlmitteltemperatur abgeleitet. Eine gleichzeitige Überwachung der Brennstofftemperatur ist nicht möglich.

In der DE-A-3 008 198 wird ein ähnlicher Problemkreis behandelt. Es wird ein Verfahren beschrieben, das den Anteil des Volumendurchsatzes in einem Brennelement zu bestimmen gestattet. Eine Überwachung der Brennstofftemperatur ist aber nicht vorgesehen.

In der oben erwähnten CA-A-1 083 268, von der die vorliegende Erfindung ausgeht, wurde bereits eine Korrekturschaltung vorgeschlagen, die die Überwachung von Kühlungsstörungen auch bei transienten Vorgängen verbessert. Durch zeitverzögerte Korrelation der Kühlmitteleintrittstemperatur mit der Kühlmittelaustrittstemperatur und andere Verknüpfungen der Messwerte wird die Verfügbarkeit der Überwachung erhöht, jedoch ist auch hier eine Anpassung aller Parameter an Veränderungen nicht vorgesehen.

Aufgabe der vorliegenden Erfindung ist es daher, ein Verfahren der eingangs genannten Art so zu verbessern, dass eine empfindliche Feststellung von Kühlungsstörungen in Reaktorkernen, insbesondere bei natriumgekühlten schnellen Brütern, möglich wird, bei der Fehlmeldungen weitestgehend ausgeschlossen sind, ohne dass die Empfindlichkeit der Überwachung beschränkt werden muss. Insbesondere soll auch eine Kühlungsüberwachung bei transienten Vorgängen, d.h. während normaler Betriebsänderungen im Reaktorsystem, ohne Einschränkung des Frühwarnpotentials möglich sein.

Ausserdem wird auch die Anzeige von Kurzzeit-Störungen, wie beispielsweise Blasendurchgang durch einzelne Brennelemente, angestrebt. Die Diagnose der Ursachen von Kühlungsstörungen soll durch die gleichzeitige Überwachung der Brennstoff- und Kühlmitteltemperatur verbessert werden.

Zur Lösung der geschilderten Aufgabe wird ein Verfahren gemäss dem Anspruch 1 vorgeschlagen. Demgemäss wird nicht mehr nur die Kühlmittelausgangstemperatur an jedem Brennelement überwacht, sondern die nicht direkt messbare mittlere Brennstoff- bzw. Kühlmitteltemperatur aus leicht messbaren Grössen unter Verwendung eines thermohydraulischen Modells abgeleitet. Diese mittlere Brennstoff- bzw. Kühlmitteltemperatur ist eine Grösse, deren Wert nur mit einem sehr geringen Rauschen behaftet ist. Die Probleme, die sich durch das Rauschen der Kühlmittelaustrittstemperatur ergaben, stellen sich nach einer Bestimmung der mittleren Brennstofftemperatur nicht mehr. Daher lässt sich eine Abweichung der lokalen Brennstoff- bzw. Kühlmitteltemperatur vom Sollwert mit grosser Genauigkeit feststellen, so dass eine Fehlermeldung für das betreffende Brennelement ausgelöst werden kann.

Das erfindungsgemässe Verfahren erfordert keine zusätzliche Instrumentierung am Kernreaktor und liefert trotzdem mit Hilfe der Schätzschaltung genügend Messwerte für alle freien Parameter des thermohydraulischen Modells. Mit Hilfe dieser Messungen werden nun die Brennstofftemperatur im Brennelement und die Kühlmitteltemperatur im Brennelement geschätzt. Ausserdem werden der Leistungsanteil des Brennelementes, der Anteil des Massendurchsatzes des Brennelementes, die spezifische Wärme des Kühlmittels im Brennelement, die Wärmekapazität des Brennstoffes und des Kühlmittels im Brennelement und die integrale Wärmedurchgangszahl zwischen Brennstoff und Kühlmittel bestimmt. Insbesondere die Brennstofftemperatur ist nun geeignet für eine Überwachung auf Kühlungsstörungen jedes einzelnen Brennelementes. Die übrigen Grössen dienen der Klassifizierung der über die Brennstofftemperatur indizierten Anomalie, d.h., sie können Informationen über Ursache und Risiko einer Anomalie geben.

Dieses Verfahren wird zweckmässigerweise unter Verwendung eines Kalman-Filters gemäss Anspruch 2 durchgeführt. Es kann insbesondere unter Zuhilfenahme eines Rechners mit grosser Schnelligkeit ausgeführt werden und arbeitet auch bei Zustandsänderungen des Reaktors einwandfrei und erheblich schneller als die bisherigen Verfahren. Ausserdem wird die Verfügbarkeit der Überwachung nicht durch semi-manuelles Kalibrieren beeinträchtigt, was ein weiterer Vorteil gegenüber dem Stand der Technik ist.

Im Anspruch 3 wird eine Anordnung zur Durchführung des Verfahrens vorgeschlagen. Bei dieser Anordnung werden die Messwertgeber für Gesamtleistung, Primärdurchsatz, Kühlmitteleintrittstemperatur, Kühlmittelaustrittstemperatur von jedem Brennelement mit einer Auswerteelektronik verbunden, in der die lokalen Brennstoff- bzw. Kühlmitteltemperaturen aus den Messwerten nach einer Rekursionsformel abgeleitet werden. Die lokalen Brennstofftemperaturen treten nun an die Stelle der bisher überwachten Kühlmittelaustrittstemperaturen. Dabei ist deren Rauschen bedeutend geringer als das der bisher gemessenen Kühlmittelaustrittstemperatur.

Zur Verdeutlichung des erfindungsgemässen Verfahrens dienen noch folgende Erläuterungen:

Bei natriumgekühlten schnellen Brutreaktoren stehen folgende Messgrössen durch ohnehin notwendige Messungen zur Verfügung:

P = Gesamtleistung des Kerns
$T_l$ = Temperatur des Kühlmittels am Kerneingang
W = Gesamtdurchsatz des Kühlmittels im Kühlbereich

Weiterhin wird für jedes Brennelement die Kühlmittelaustrittstemperatur gemessen:

$T_o$ = Kühlmittelaustrittstemperatur

Unter Zugrundelegung eines gängigen einfachen thermohydraulischen Modells lässt sich ein Brennelement folgendermassen beschreiben:

$$\frac{d}{dt} T_f = \frac{\varkappa p}{C_f} P - \frac{k}{C_f} (T_f - T_c) \qquad (1)$$

$$\frac{d}{dt} T_c = \frac{k}{C_c} (T_f - T_c) - \frac{2h \varkappa_w W}{C_c} (T_c - T_l), \qquad (2)$$

wobei die Buchstaben folgende Bedeutung haben:

$T_f$ = mittlere Brennstofftemperatur des Brennelementes
$T_c$ = mittlere Kühlmitteltemperatur im Brennelement
$\varkappa_p$ = Anteil der Brennelementleistung an der Gesamtleistung P
$\varkappa_w$ = Anteil des Brennelementdurchsatzes am Gesamtdurchsatz W
k = Wärmedurchgangszahl zwischen Brennstoff und Kühlmittel
h = spezifische Wärme des Kühlmittels
$C_f$ = Wärmekapazität des Brennstoffes im Brennelement
$C_c$ = Wärmekapazität des Kühlmittels im Brennelement

Unter der Annahme eines linearen axialen Temperaturprofils im Brennelement gilt der Zusammenhang:

$$T_c = \frac{1}{2} (T_o + T_l) \text{ oder } T_o = 2T_c - T_l.$$

Bei einer Linearisierung um den Arbeitspunkt, der dabei zeitabhängig ist, und einer Diskretisierung des linearen Modells lassen sich die Gleichungen (1) und (2) in ein System von linearen Differenzengleichungen zusammenfassen:

$$X_{k+1} = \Phi X_k + \Gamma u_k \qquad (3)$$

$$Y_k = H X_k + Du_k$$

wobei $\Phi$, $\Gamma$, H und D Parametermatrizen sind und

$$X_k = X(t_k) = \begin{bmatrix} \delta T_f \\ \delta T_c \end{bmatrix}$$

den Zustandsvektor des Brennelementes zum Zeitpunkt $t_k$ bedeutet.

$$Y_k = Y(t_k) = \delta T_o \quad \text{ist die Messgrösse}$$
$$u_k = u(t_k) = \begin{bmatrix} \delta P \\ \delta T_l \\ \delta W \end{bmatrix} \quad \begin{array}{l} \text{und} \\ \\ \text{ist der Vektor der} \end{array} \qquad (4)$$

ebenfalls gemessenen Eingangs-(Stör-)Grössen.

Das Gleichungssystem (3), (4) beschreibt die Wirkung der Störungen $u_k$ auf das Core-Verhalten zu den jeweils diskret gewählten Messzeitpunkten $t_k$ in der Umgebung des Arbeitspunktes.

Das hier behandelte Problem besteht nun unter anderem darin, den nicht direkt messbaren Zustandsvektor $X_k$ aus den Messwerten $Y_k$ und $u_k$ zu bestimmen. Dies lässt sich in besonders geeigneter Weise durch ein Zustandsschätzverfahren, ein sogenanntes Kalman-Filter, bewerkstelligen. Die zugehörige Theorie ist z.B. beschrieben in dem Buch: K.W. Schrick, «Anwendung der Kalman-Filter-Technik», Oldenborg Verlag, München Wien 1977.

Im folgenden wird ein nur zum besseren Verständnis eingeführter hochgestellter Index verwendet, der den Zeitpunkt angibt, bis zu dem Messwerte in die so indizierte Grösse eingeflossen sind. So bedeutet beispielsweise:

$\hat{X}^k_{k+1}$ Schätzwert des Zustandsvektors X für den Zeitpunkt $t_{k+1}$ unter Verwendung von Messwerten bis einschliesslich zum Zeitpunkt $t_k$.

Ein vorhergesagter Schätzwert für X zum Zeitpunkt $t_{k+1}$ lässt sich nach (3) berechnen:

$$\hat{X}^k_{k+1} = \Phi\,\hat{X}^k_k + \Gamma\,u_k$$

Je genauer dieser Schätzwert anfangs ist, desto grösser wird auch die Differenz sein zwischen Messwert $Y_{k+1}$ und dem Schätzwert

$$\hat{Y}^k_{k+1} = H\,\hat{X}^k_{k+1} + Du_{k+1} \quad \text{(siehe (4))}.$$

Deshalb benutzt das eigentliche Kalman-Filter die mit einem Faktor $K_{k+1}$ gewichtete Dfferenz.

$$K_{k+1}\,(Y_{k+1} - \hat{Y}^k_{k+1}) = K_{k+1}\,(Y_{k+1} - H\,\hat{X}^k_{k+1} - Du_{k+1})$$

als Korrektur des vorhergesagten Schätzwertes $\hat{X}^k_{k+1}$.

Dadurch fliessen noch Messwerte vom Zeitpunkt $t_{k+1}$ ein, und es ergibt sich ein verbesserter Schätzwert nach der Rekursionsformel:

$$\hat{X}^{k+1}_{k+1} = \Phi\hat{X}^k_k + \Gamma u_k + K_{k+1}\,(Y_{k+1} - H\,\hat{X}^k_{k+1} - Du_{k+1}) \quad (5)$$

In der Literatur ist bewiesen, dass sich $\hat{X}^{k+1}_{k+1}$ mit zunehmender Zahl von Messungen, d.h. mit wachsendem Index k dem tatsächlichen Wert X nähert.

Für die hier dargelegte Erfindung ist dabei aber entscheidend, dass die nicht direkt messbare Brennstofftemperatur verfügbar gemacht werden kann und diese Grösse ausserordentlich rauscharm ist. Der Grund ist einerseits die grosse Wärmekapazität $C_t$ des Brennstoffes, welche sozusagen die Wirkung eines «Tiefpassfilters» auf das Rauschen der verschiedenen Parameter hat, und andererseits die Tatsache, dass der Schätzwert erheblich rauschärmer ist, als der tatsächliche Wert der Brennstofftemperatur $T_f$. (Daher auch die Bezeichnung Kalman-Filter).

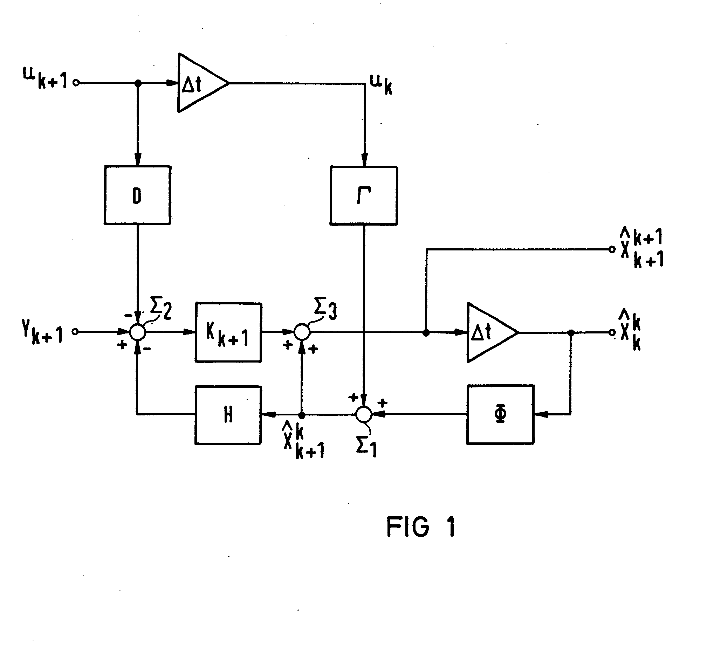

Ein Blockschaltbild zur Veranschaulichung einer Schätzschaltung unter Einbeziehung dieses Filters ist in der Zeichnung, Fig. 1, dargestellt.

Die zum Zeitpunkt $t_{k+1}$ gemessenen Grössen $Y_{k+1}$ und $u_{k+1}$ werden mit Hilfe dieser Schätzschaltung so verarbeitet, dass der nicht messbare Brennelement-Zustand

$$\hat{X}^k_k \text{ bzw. } \hat{X}^{k+1}_{k+1}$$

am Ausgang anfällt.

Die Schaltung bildet genau die Rekursionsformel (5) nach. Die am Ausgang anliegende Schätzgrösse $\hat{X}^k_k$ wird mit $\Phi$ verstärkt und zu einem Addierer $\Sigma_1$ geführt. Aus dem am Eingang anliegenden Messwert $u_{k+1}$ wird über eine Verzögerungsschaltung der um $\Delta t$ verzögerte Messwert $u_k$ gebildet, welcher mit $\Gamma$ verstärkt und ebenfalls dem Addierer $\Sigma_1$ zugeführt wird.

Der ebenfalls am Eingang anliegende Messwert $Y_{k+1}$ wird einem Addierer $\Sigma_2$ zugeführt. Dorthin

kommt auch der um den Faktor -H verstärkte Ergebniswert $\hat{X}^k_{k+1}$ aus dem Addierer $\Sigma_1$ und ausserdem der mit -D verstärkte Messwert $u_{k+1}$. Das Ergebnis (entspricht $Y_{k+1} - \hat{Y}_{k+1}$) wird in einem Verstärker noch mit $K_{k+1}$ gewichtet und dem Addierer $\Sigma_3$ zugeführt, an dessen Eingang auch $\hat{X}^k_{k+1}$ anliegt. Aus $\Sigma_3$ kommt als Ergebnis der Schätzwert $\hat{X}^{k+1}_{k+1}$, der nach der Zeit $\Delta t$ über eine Verzögerungsschaltung an die Stelle von $\hat{X}^k_k$ tritt, wenn im nächsten Schritt $\hat{X}^{k+2}_{k+2}$ geschätzt wird. Die kontinuierlich gemessenen Grössen $u_{k+1}$ und $Y_{k+1}$ werden von der Schaltung über einen Zeittaktgeber in Zeitabständen $\Delta t$ abgefragt und verarbeitet (Diskretisierung), wobei die Verzögerung um $\Delta t$ jeweils auch durch Abspeichern des vorhergehenden Wertes erfolgen kann. Bei dem Blockschaltbild ist zu beachten, dass die einzelnen Grössen Vektoren bzw. Matrizen sind, so dass eine Schaltung mit Aufschlüsselung nach einzelnen Komponenten die einzelnen Bauteile mehrfach enthalten würde, was zur besseren Übersicht und Schematisierung hier vermieden wurde, dem Fachmann aber unmittelbar einsichtig ist.

Der sehr rauscharme Schätzwert der Brennstofftemperatur $T_f$ des jeweiligen Brennelementes wird nun überwacht, und eine Abweichung vom Sollwert löst eine Fehlermeldung aus. Entscheidend dabei ist auch, dass dieses Überwachungsverfahren auch bei transienten Vorgängen (z.B. Lastmanövern) verfügbar ist, da alle relevanten Parameter aus den Messungen laufend neu bestimmt werden (automatische Kalibrierung).

Dazu werden die zum Zeitpunkt $t_k$ gemessenen Grössen $Y_k$ und $u_k$ mit Hilfe einer zweiten Schätzschaltung so verarbeitet, dass die Schätzwerte $\Phi$ und $\hat{\Gamma}$ am Ausgang anfallen und bei Bedarf in das Kalman-Filter eingeführt werden können. Dabei ist wesentlich, dass die Genauigkeit der Core-Parameter-Schätzung nicht von den Schätzfehlern in den Brennstoff- und Kühlmitteltemperaturen abhängt. (Es ist keine Rückkopplung vom Kalman-Filter an die Parameter-Schätzanordnung erforderlich.)

Es ist von der Literatur bekannt (z.B. E.V. Bohn, M.K. De Beer «Consistant Parameter Estimation in Multi-input Multi-output Discrete Systems», Automatica, Vol. 13, pp 301–305, 1977), dass der Zustand x in den Gleichungen (3), (4) analytisch eliminiert und dass dadurch ein algebraischer Zusammenhang zwischen den Elementen der Systemmatrizen $\Phi$, $\Gamma$ und den Messwerten Y, u hergestellt werden kann. Die resultierenden Gleichungen haben standardlineares Regressionsformat.

Die unbekannten Parameter können deshalb mit Hilfe der Methode der kleinsten Quadrate rekursiv bestimmt werden. Die dazu verwendete zweite Schätzschaltung ist der Struktur nach identisch mit dem in der Zeichnung dargestellten Kalman-Filter. An die Stelle des Zustandsvektors x tritt der aus den Elementen von $\Phi$ und $\Gamma$ gebildete Parametervektor $\Lambda$.

Somit ist durch diese Verkopplung zwischen Core-Parameter und Core-Zustands-Schätzanordnung die Verfügbarkeit der Brennelement-Überwachung stark erhöht, während die Fehlalarme trotz Steigerung der Empfindlichkeit erheblich reduziert werden.

Bei dem bisher beschriebenen System gibt es allerdings noch Fälle, in denen die Überwachung mit einem Kalman-Filter nicht anwendbar ist, bzw. die Schätzergebnisse nicht interpretierbar sind. Dies trifft insbesondere für Kurzzeit-Störungen zu, wie sie beispielsweise beim Durchgang von Blasen durch ein Brennelement entstehen.

Man versucht bisher den Durchgang von Blasen durch das Core mit Hilfe eines Reaktimeters festzustellen, jedoch ist dies nur dann möglich, wenn alle Brennelemente einigermassen gleichmässig von Blasen durchlaufen werden, während der Durchgang einer kleinen Blase durch nur ein Brennelement zu einem mit dem Reaktimeter nicht feststellbaren Effekt führt. Bei dem bisher beschriebenen Kalman-Filter ist die wiederkehrende periodische Kalibrierung nur dann wirksam, wenn sich die System-Parameter (wie z.B. Wärmedurchgangszahl, Radialdurchsatz- und Leistungsverteilung) hinreichend langsam im Vergleich mit der Konvergenzgeschwindigkeit der Schätzfehler verändern, d.h. etwa für mindestens eine Minute konstant bleiben. Störungen der radialen Durchsatzverteilung können auch dann mit guter Schätzgenauigkeit bestimmt werden, wenn die Störung nur kurz (Bruchteile einer Sekunde) dauert. Wenn sich aber gleichzeitig mit der Brennelement-Durchsatzstörung auch Core-Parameter verändern, dann ist die Schätzgenauigkeit des Kalman-Filters möglicherweise für Kurzzeitvorgänge nicht ausreichend. Dies ist bei dem Blasendurchgang der Fall.

Da mit dem Kalman-Filter anhand des Modells auch die Messwerte $Y_k$ nochmals geschätzt werden, kann man die «Verstimmung» des Kalman-Filters daran erkennen, dass die Schätzwerte für die eingegebenen Messwerte von diesen erheblich abweichen. Diese Abweichungen, im folgenden Messwert-Residuen $\Delta Y = Y_k - \hat{Y}_k$ genannt, enthalten aber zusätzliche Informationen, welche bei einer Kompensation des beschriebenen Nachteils helfen können. Simulationsrechnungen haben ergeben, dass bei Durchgang einer Blase durch ein Brennelement stark von Null verschiedene Werte des Messwert-Residuums auftreten. Dies kann nur eine Folge der bei Blasendurchgang auftretenden Parameterfehler sein. Es sei daran erinnert, dass die Parameter (K = Wärmedurchgangszahl zwischen Brennstoff und Kühlmittel, $C_c$ = Wärmekapazität des Kühlmittels im Brennelement, $x_w$ = Anteil des Brennelement-Durchsatzes am Gesamtdurchsatz) während des Blasendurchlaufs von etwa 0,5 Sek. nach Massgabe der Blasengrösse gestört werden. Nach Austritt der Blase aus dem Core nehmen diese Parameter zwar wieder die ursprünglichen Werte an, aber die durch diese «Verstimmung» verursachten Schätzfehler in $T_f$ verschwinden erst nach etwa 20 Sek.

Im Anspruch 4 wird daher eine Anordnung vorgeschlagen, die auch eine Detektion und Diagnose vom Blasendurchgang ermöglichen und die Verstimmung des Kalman-Filters aufhebt. Dazu wird zum Kalman-Filter eine Korrektur-Schaltung hinzugeführt. Zum Verständnis dieser Korrektur ist nochmals das thermohydraulische Modell heranzuziehen:

Man kann die Brennstofftemperatur $T_f$ als Funktion von Messgrössen und des Residuums $\Delta Y$ und des Schätzwertes für $T_c$ darstellen:

$$\delta\hat{T}_{f,j-1}^{j-1} = \frac{1}{\Phi_{21}} \left[ \frac{1}{2}(Y_j + u_{2j} - \Delta Y) - \right.$$

$$\left. - (\gamma_{21} u_{1,j-1} + \gamma_{22} u_{2,j-1} + \gamma_{23} u_{3,j-1}) - \Phi_{22} \delta\hat{T}_{c,j-1}^{j-1} \right]$$

$$(6)$$

Es wird nun ein korrigierter Wert gesucht, der $\Delta Y$ zu Null macht und daher folgender Gleichung genügen muss:

$$\delta\hat{T}_{f,COR}^{j-1} = \frac{1}{\Phi_{21}} \left[ \frac{1}{2}(Y_j - u_{2j}) - (\gamma_{21} u_{1,j-1} + \right.$$

$$\left. + \gamma_{22} u_{2,j-1} + \gamma_{23} u_{3,j-1}) - \Phi_{22} \delta\hat{T}_{c,j-1}^{j-1} \right] \qquad (7)$$

Da diese Korrektur sich durch Verarbeitung von Messgrössen und der von kurzzeitigen Parameter-Störungen nicht betroffenen Grösse $T_c$ durchführen lässt, bietet sich daher eine Verbesserung der Überwachung.

Der Anspruch 4 sieht daher vor, eine Korrekturschaltung, die diese Formel ausnutzt, dem Kalman-Filter nachzuschalten. Beispielsweise bei Blasendurchgang, wo das Kalman-Filter kurzzeitig verstimmt wird, gibt der nach der Formel (7) bestimmte Wert $\delta\hat{T}_{f,COR}$ den aktuellen Wert der Brennstofftemperatur an.

Da die Eingangsgrössen u verrauscht sind, sich aber ansonsten nur langsam verändern, können diese, wie im Anspruch 5 vorgeschlagen, mittels Tiefpassfiltern geglättet werden. Die Zeitkonstanten können dabei gross gegen die Rauschfrequenzen gewählt werden und bleiben dennoch unterhalb der für Arbeitspunktverschiebungen signifikanten Zeit. Die Zeitkonstanten liegen in der Grössenordnung von einigen Sekunden.

Auch die Ausgangsgrösse der Korrekturschaltung $\hat{T}_{f,COR}$ ist etwas verrauscht und kann gemäss Anspruch 6 geglättet werden. Die Zeitkonstante des hierzu vorgeschlagenen Tiefpassfilters ist jedoch sehr kritisch, da eine zu grosse Zeitkonstante einen Phasenfehler in $\hat{T}_{f,COR}$ hervorruft, so dass dieser Wert Änderungen nicht schnell genug folgt. Ein akzeptabler Kompromiss zwischen Glättungseffekt und Phasenfehler liegt bei einer Zeitkonstanten von ungefähr 1 sec. Die Wärmekapazität des Brennstoffes selbst wirkt auf Änderungen der Brennstofftemperatur wie ein Tiefpassfilter mit einer bestimmten Zeitkonstanten. Deren Grösse sollte etwa als obere Grenze eingehalten werden.

Im Anspruch 7 wird noch ein weiterer Aspekt der Korrekturschaltung benannt. Die Ausgangsgrösse $\delta\hat{T}_c$ des Kalman-Filters kann mit für viele

Fälle ausreichender Genauigkeit durch den Mittelwert der Kühlmitteleintritts- und -austrittstemperatur ersetzt werden:

$$\delta \hat{T}_c = \frac{1}{2}(\delta T_o + \delta T_l)$$

Daher kann die Korrekturschaltung auch am Eingang mit reinen Messgrössen beaufschlagt werden und benötigt nicht die Ausgangswerte des Kalman-Filters. In diesem Fall arbeitet die Korrekturschaltung auch bei Ausfall des Kalman-Filters und trägt zur Redundanz des Überwachungssystems bei. Für diese Ausführung müsste ein Tiefpassfilter zur Glättung der verrauschten Eingangsgrösse $\frac{1}{2}(\delta T_o + \delta T_l)$ vorgesehen werden.

In der Zeichnung sind schematisch Ausführungsbeispiele der Schätz- und Korrekturschaltung dargestellt. Die Figur 1, schon im Zusammenhang mit Anspruch 3 erläutert, zeigt den prinzipiellen Aufbau eines Kalman-Filters zur Lösung der gestellten Aufgabe. Die gewählte Darstellungsart lehnt sich an in der Kalman-Filter-Technik übliche Zeichnungen an.

Fig. 1 zeigt keinen Schaltplan im üblichen Sinne, sondern eine Art Blockdiagramm, das durch eine Analogschaltung oder auch beispielsweise mit einem Mikroprozessor verwirklicht werden kann.

In Fig. 2 ist ein entsprechender Plan für ein Ausführungsbeispiel der Korrekturschaltung dargestellt. Die Schaltung bildet durch Addierer und Verstärker die Formel (7) nach. Die Eingangsgrössen

$$u = \begin{pmatrix} u_1 \\ u_2 \\ u_3 \end{pmatrix} = \begin{pmatrix} \delta P \\ \delta T_l \\ \delta W \end{pmatrix}$$

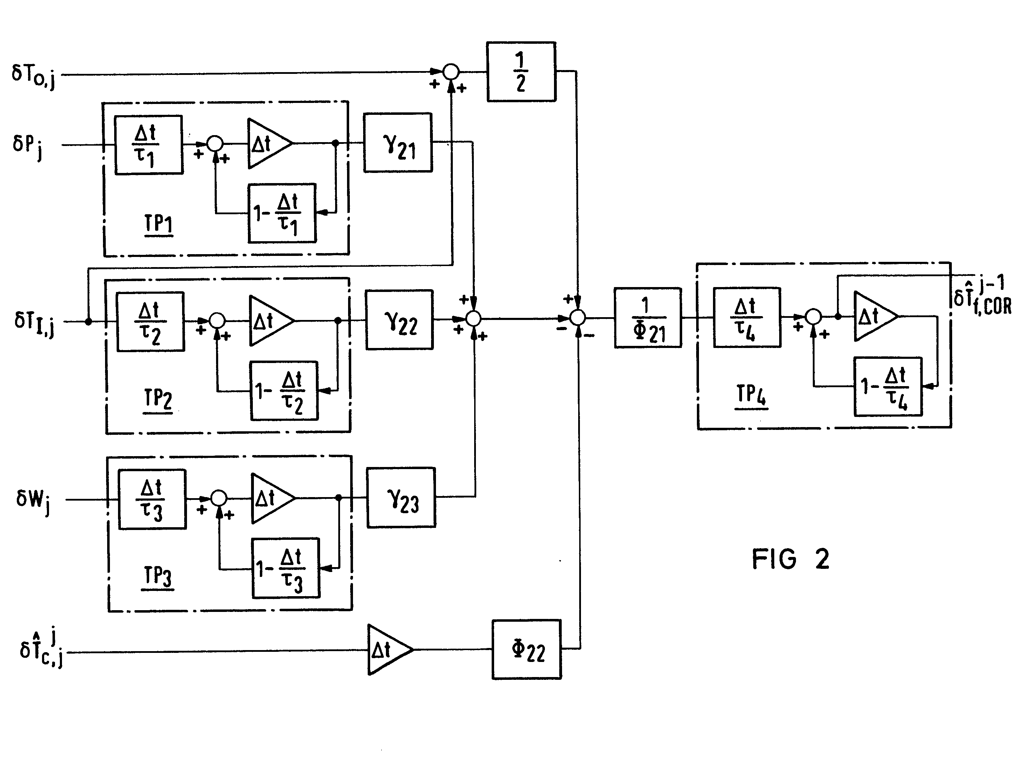

werden jeweils durch ein Tiefpassfilter $TP_1$, $TP_2$, $TP_3$ geglättet. Die Zeitkonstanten $\tau_1$, $\tau_2$, $\tau_3$ der drei Filter sind dabei nicht sehr kritisch. In der Fig. 2 sind Verstärker durch Vierecke gekennzeichnet, in denen der Verstärkungsfaktor eingetragen ist. Dreiecke mit eingeschriebenem $\Delta t$ bedeuten Verzögerer mit einem Zeitunterschied von $\Delta t$ zwischen Eingangs- und Ausgangswert. Addierer sind als Kreise eingezeichnet, wobei die Vorzeichen der Summanden neben den Eingängen stehen. Die dargestellte Korrekturschaltung zeigt eine Ausführung, wie sie bei einer Diskretisierung der Messwerte auftritt, was aber nicht zwingend notwendig ist. Die kontinuierlich gemessenen Werte am Eingang werden in Abständen $\Delta t$ von der Elektronik übernommen. Die Verzögerer speichern den angelegten Wert für die Zeit $\Delta t$, so dass an ihrem Ausgang der vorhergehende Messwert anliegt, wenn der neue am Eingang ankommt.

Die hier ausgeführten Überlegungen zur Überwachung der Kühlung eines Reaktors mittels «indirekter Messungen» (d.h. mittels der Schätzwerte nicht messbarer Grössen) unter Verwendung eines Kalman-Filters und rekursiver Parameter-Schätzverfahren sind verallgemeinerungsfähig und erlauben z.B. auch eine Bestimmung der Beiträge zur Reaktivitätsbilanz. Es erscheint deshalb wahrscheinlich, dass den am speziellen Beispiel der Kühlungsstörungen erprobten Methoden wachsende Bedeutung zukommt und sie zu einer globalen Core-Überwachung führen werden.

Die laufende Bestimmung aller relevanten, aber nicht notwendigerweise direkt messbaren Grössen eines Reaktors aus den Messdaten verbessert sowohl das Frühwarnpotential als auch die Möglichkeiten der Erkennung von Störungsursachen.

**Patentansprüche**

1. Verfahren zur Feststellung und Meldung von Kühlungsstörungen in einem Brennelement eines Reaktorkerns, insbesondere eines natriumgekühlten, schnellen Brutreaktors, wobei die Kühlmittelausgangstemperatur ($T_o$) über dem Brennelement und ausserdem die Gesamtleistung (P) des Reaktorkerns, der Primärkühlmittelgesamtdurchsatz (W) und die Kühlmitteleintrittstemperatur ($T_l$) oder andere in diese Grössen umrechenbare Messgrössen gemessen und funktional miteinander verknüpft werden, gekennzeichnet durch folgende Merkmale:

a) Der zur Kennzeichnung des Zustandes des Brennelementes anhand eines thermohydraulischen Modells notwendige Zustandsvektor ($X_k$) wird in einer dem Brennelement zugeordneten parameteradaptiven, rekursiv arbeitenden Schätzschaltung unter Berücksichtigung von anstehenden Messwerten und früheren Schätzergebnissen in Zeitabständen $\Delta t$ geschätzt.

b) Die Schätzschaltung liefert geschätzte Zustandswerte des betreffenden Brennelementes, darunter auch die nicht oder nur schwer messbare mittlere Brennstofftemperatur ($T_f$) und die mittlere Kühlmitteltemperatur ($T_c$) im Brennelement.

c) Die geschätzte mittlere Brennstofftemperatur ($T_f$) und/oder die geschätzte mittlere Kühlmitteltemperatur ($T_c$) im Brennelement werden einem Sollwertvergleicher zugeführt, der bei zu grosser Abweichung von einem vorgebbaren Sollwert eine Fehlermeldung auslöst.

2. Verfahren nach Anspruch 1, dadurch gekennzeichnet, dass die parameteradaptive, rekursiv arbeitende Schätzschaltung eir Kalman-Filter beinhaltet.

3. Anordnung zur Durchführung des Verfahrens nach Anspruch 1 oder 2, gekennzeichnet durch folgende Merkmale:

a) Dem Brennelement ist eine zeittaktgesteuerte parameteradaptive, rekursiv arbeitende Schätzschaltung zugeordnet, welche anhand eines das Brennelement beschreibenden thermohydraulischen Modells in Zeitabständen $\Delta t$ den Zustand des Brennelementes, darunter auch seine mittlere Kühlmitteltemperatur ($T_c$) schätzt.

b) Die Schätzschaltung ist eingangsseitig mit Messwertgebern für die Kühlmittelausgangstemperatur ($T_o$) und Messwertgebern für die Gesamtleistung des Reaktorkerns (P), den Primärkühlmittelgesamtdurchsatz (W) und die Kühlmitteleintrittstemperatur ($T_l$) verbunden.

c) Die Schätzschaltung ist ausgangsseitig mit einer Überwachungseinrichtung mit Sollwertvergleicher verbunden, welche die geschätzte mittlere Brennstofftemperatur ($T_f$) und/oder die geschätzte mittlere Kühlmitteltemperatur ($T_c$) auf Abweichungen von vorgebbaren Sollwerten überwacht und gegebenenfalls Fehlermeldungen auslöst.

$$\hat{X}_{k+1}^{k+1} = \Phi\,\hat{X}_k^k + \Gamma u_k + K_{k+1}\,(Y_{k+1} - H\,\hat{X}_{k+1}^k - D\,u_{k+1})$$

mit

$$\hat{X} = \begin{pmatrix} \overset{\wedge}{T_f} \\ T_c \end{pmatrix} = \text{geschätzter Zustandsvektor für ein Brennelement,}$$

$$u = \begin{pmatrix} \delta P \\ \delta T_I \\ \delta W \end{pmatrix} = \text{(ggf. differenzierte) Eingangsgrösse} \begin{pmatrix} \text{Gesamtleistung} \\ \text{Kühlmitteltemperatur} \\ \text{Kühlmittelgesamt-} \\ \text{durchsatz} \end{pmatrix}$$

$$Y = \delta T_o = \text{(ggf. differenzierte) Eingangsgrösse (Kühlmittelausgangstemperatur),}$$

wobei $\Phi, \Gamma$, K, H, D Parametermatrizen bedeuten und die Indices k bzw. (k+1) eine Zuordnung der zeitlichen Reihenfolge ermöglichen, und zwar gibt der hochgestellte Index den Zeitpunkt an, bis zu dem Messwerte in die so indizierte Grösse eingegangen sind, und der tiefgestellte Index den Zeitpunkt, für den die indizierte Grösse gilt.

4. Anordnung nach Anspruch 3, gekennzeichnet durch folgende Merkmale:

a) Es ist eine Korrekturschaltung vorhanden, welche dem Kalman-Filter nachgeschaltet ist.

b) An der Korrekturschaltung liegen die Messwerte μ und $\delta T_o$ als Eingangsgrössen an.

c) Als weitere Eingangsgrösse liegt der vom Ausgang des Kalman-Filters kommende Schätzwert $\delta\hat{T}_c$ an.

d) Die Korrekturschaltung bildet die Formel nach:

$$\delta\hat{T}_{f,COR}^{j-1} = \frac{1}{\Phi_{21}} \left[ \frac{1}{2}(Y_j - u_{2j}) - (\gamma_{21}\,u_{1,j-1} + \right. $$
$$\left. + \gamma_{22}\,u_{2,j-1} + \gamma_{23}\,u_{3,j-1}) - \Phi_{22}\,\delta\hat{T}_{c,j-1}^{j-1} \right]$$

5. Anordnung nach Anspruch 4, gekennzeichnet durch folgende Merkmale:

a) Zur Glättung der (quasistationären) Eingangsgrössen

$$u = \begin{pmatrix} u_1 \\ u_2 \\ u_3 \end{pmatrix} = \begin{pmatrix} \delta P \\ \delta T_I \\ \delta W \end{pmatrix}$$

sind Tiefpassfilter ($TP_1$, $TP_2$, $TP_3$) vorhanden.

b) Die Zeitkonstanten ($\tau_1$, $\tau_2$, $\tau_3$) der Tiefpassfilter ($TP_1$, $TP_2$, $TP_3$) sind gross gegenüber den Rauschfrequenzen und klein gegenüber den für Arbeitspunktverschiebungen nötigen Zeiten.

6. Anordnung nach Anspruch 4 oder 5, gekennzeichnet durch folgende Merkmale:

a) Zur Glättung der Ausgangsgrösse der Korrekturschaltung $\delta\hat{T}_{f,COR}$ ist ein Tiefpassfilter ($TP_4$) vorhanden.

d) Es ist eine weitere Schätzschaltung vorhanden, die aus den Messwerten die Parametermatrizen ($\Phi, \Gamma$) jeweils neu schätzt und bei Bedarf in die erste Schätzschaltung einspeist.

e) Zumindest die erste Schätzschaltung beinhaltet ein Kalman-Filter und bildet folgende Rekursionsformel nach:

b) Die Zeitkonstante ($\tau_4$) des Tiefpassfilters ($TP_4$) liegt in der Grössenordnung von 1 sec und ist nach oben begrenzt von der durch die Wärmekapazität des Brennstoffes gegebenen Zeitkonstanten.

7. Anordnung nach Anspruch 4, 5 oder 6, gekennzeichnet durch folgende Merkmale:

a) Als Eingangsgrösse liegt statt $\delta\hat{T}_c$ vom Ausgang des Kalman-Filters die Grösse $\frac{1}{2}(\delta T_o + \delta T_I)$, die aus Messgrössen gebildet ist, an.

b) Es ist ein Tiefpassfilter zur Glättung von $\frac{1}{2}(\delta T_c + \delta T_I)$ vorhanden.

## Claims

1. A method of determining and reporting cooling failures in a fuel element of a reactor core, in particular a sodium cooled, high-speed breeder reactor, where the coolant output temperature ($T_o$) about the fuel element, and also the overall power (P) of the reactor core, the overall primary coolant throughput (W), and the coolant input temperature ($T_I$), or other measured values which can be converted into these values, are measured and functionally logic-linked to one another, characterised by the following features:

a) the status vector ($X_k$) required in order to characterise the status of the fuel element on the basis of a thermo-hydraulic model is estimated, at time intervals $\Delta t$, in a parameter-adaptive, recursively operating estimating circuit assigned to the fuel element, taking into consideration existing measured values and earlier estimation results;

b) the estimating circuit supplies: estimated status values of the fuel element in question, including both the mean fuel temperature ($T_f$) and the mean coolant temperature ($T_c$) in the fuel element which either cannot themselves be measured or only with difficulty;

c) the estimated, mean fuel temperature ($T_f$) and/or the estimated mean coolant temperature (T_c) in the fuel element are fed to a theoretical value comparator which triggers a fault message in the event of too great a deviation from a predeterminable theoretical value.

2. A method as claimed in Claim 1, characterised in that the parameter-adaptive, recursively operating estimating circuit contains a Kalman filter.

3. An arrangement for implementation of the method claimed in Claim 1 or 2, characterised by the following features:

a) the fuel element is assigned a time-clock controlled, parameter-adaptive, recursively operating estimating circuit which estimates, on the basis of a thermo-hydraulic model which describes the fuel element, at time intervals $\Delta t$, the status of the fuel element, including its mean coolant temperature $(T_c)$;

b) the estimating circuit input is connected to measurement sensors for the coolant output temperature $(T_o)$ and measurement sensors for the overall power of the reactor core (P), the overall primary coolant throughput (W) and the coolant input temperature $(T_l)$;

c) the estimating circuit output is connected to a monitoring device which includes a theoretical value comparator that monitors the estimated mean fuel temperature $(T_f)$ and/or the estimated mean coolant temperature $(T_c)$ in respect of deviations from predeterminable theoretical values, and where necessary triggers fault messages;

d) a further estimating circuit is provided which re-estimates the parameter matrices $(\Phi, \Gamma)$ from the measured values and where necessary feeds these into the first estimating circuit;

e) at least the first estimating circuit contains a Kalman filter and forms the following recursion formula in accordance with:

$$\hat{X}_{k+1}^{k+1} = \Phi \hat{X}_k^k + \Gamma u_k + K_{k+1} (Y_{k+1} - H \hat{X}_{k+1}^k - D u_{k+1})$$

where

$$\hat{X} = \begin{pmatrix} \hat{T}_f \\ T_c \end{pmatrix} = \text{estimated status vector for a fuel element:}$$

$$u = \begin{pmatrix} \delta P \\ \delta T_l \\ \delta W \end{pmatrix} = \text{(possibly differentiated) input values:} \begin{pmatrix} \text{overall power} \\ \text{coolant temperature} \\ \text{coolant overall} \\ \text{throughput} \end{pmatrix};$$

$$Y = \delta T_o = \text{(possibly differentiated) input value} \quad \text{[coolant output temperature]};$$

ard where $\Phi, \Gamma, K, H, D$ signify parameter matrices and indices k and (k + 1) permit assignment to the time sequence, the upper index indicating the time up to which measured values have been entered into the thus indexed value, and the lower index indicating the time for which the indexed value applies.

4. An arrangement as claimed in Claim 3, characterised by the following features:

a) a correcting circuit connected to the output end of the Kalman filter;

b) measured values $\mu$ and $\delta T_o$ being applied as input values to the correcting circuit;

c) the estimated value $\delta \hat{T}_c$ emanating from the output of the Kalman filter being applied as a further input value;

d) the correcting circuit forming the formula in accordance with:

$$\delta \hat{T}_{f, COR}^{j-1} = \frac{1}{\Phi_{21}} \left[ \frac{1}{2} (Y_j - u_{2j}) - (\gamma_{21} u_{1, j-1} + \right.$$

$$\left. + \gamma_{22} u_{2, j-1} + \gamma_{23} u_{3, j-1}) - \Phi_{22} \delta \hat{T}_{c, j-1}^{j-1} \right]$$

5. An arrangement as claimed in Claim 4, characterised by the following features:

a) low-pass filters $(TP_1, TP_2, TP_3)$ are provided for smoothing the (quasi-stationary) input values

$$u = \begin{pmatrix} u_1 \\ u_2 \\ u_3 \end{pmatrix} = \begin{pmatrix} \delta P \\ \delta T_l \\ \delta W \end{pmatrix} ; \text{ and}$$

b) the time constants $(\tau_1, \tau_2, \tau_3)$ of the low-pass filters $(TP_1, TP_2, TP_3)$ are high in comparison to the noise frequencies and low in comparison to the times necessary for operating point changes.

6. An arrangement as claimed in Claim 4 or 5, characterised by the following features:

a) a low-pass filter $(TP_4)$ is provided for smoothing the output value of the correction circuit $\delta \hat{T}_{f,COR}$; and

b) the time constant $(\tau_4)$ of the low-pass filter $(TP_4)$ lies in the order of 1 sec and its upper limit is defined by the time constant governed by the heat capacity of the fuel.

7. An arrangement as claimed in Claim 4, 5 or 6, characterised by the following features:

a) the value $\frac{1}{2} (\delta T_o + \delta T_l)$ formed from measured values is applied as an input value instead of $\delta \hat{T}_c$ from the output of the Kalman filter; and

b) a low-pass filter is provided for smoothing $\frac{1}{2} (\delta T_c + \delta T_l)$.

**Revendications**

1. Procédé pour la détermination et la signalisation de perturbations de refroidissement dans un élément combustible d'un corps de réacteur, notamment d'un surrégénérateur rapide refroidi par du sodium, et selon lequel on mesure et on combine de façon fonctionnelle entre eux la température de sortie ($T_o$) du fluide de refroidissement dans l'élément combustible et en outre la puissance globale (P) du cœur du réacteur, le débit total (W) du fluide de refroidissement primaire et la température d'entrée ($T_I$) du fluide de refroidissement ou d'autres grandeurs de mesure pouvant être converties en ces grandeurs, remarquable par les caractéristiques suivantes:

a) le vecteur d'état ($X_k$), qui est nécessaire pour caractériser l'état de l'élément combustible sur la base d'un modèle thermo-hydraulique, est estimé, pendant des intervalles de temps $\Delta t$, dans un circuit d'estimation, qui est associé à l'élément combustible, est adaptatif du point de vue des paramètres et travaille de façon récurrente, en tenant compte de valeurs de mesure apparaissantes et de résultats antérieurs d'estimation;

b) le circuit d'estimation délivre des valeurs d'état estimées de l'élément combustible considéré et qui incluent également la température moyenne ($T_f$) du combustible, que l'on ne peut pas mesurer ou que l'on peut mesurer seulement difficilement, et la température moyenne ($T_c$) du fluide de refroidissement dans l'élément combustible;

c) la température moyenne estimée ($T_f$) du combustible et/ou la température moyenne estimée ($T_c$) du fluide de refroidissement dans l'élément combustible sont envoyées à un comparateur à valeur de consigne, dans lequel une signalisation de défaut est déclenchée dans le cas d'un écart trop important par rapport à une valeur de consigne pouvant être prédéterminée.

2. Procédé suivant la revendication 1, caractérisé par le fait que le circuit d'estimation, qui est adaptatif du point de vue des paramètres et qui fonctionne de façon récurrente, contient un filtre de Kalman.

3. Dispositif pour la mise en œuvre du procédé suivant la revendication 1 ou 2, remarquable par les caractéristiques suivantes:

a) à l'élément combustible se trouve associé un circuit d'estimation, qui est commandé de façon cadencée dans le temps, est adaptatif du point de vue des paramètres et fonctionne de façon récurrente et qui, sur la base d'un modèle thermo-hydraulique décrivant l'élément combustible, estime pendant des intervalles de temps $\Delta t$ l'état de l'élément combustible, incluant également la température moyenne ($T_c$) de fluide de refroidissement sur cet élément;

b) le circuit d'estimation est relié, du côté entrée, à des générateurs de valeurs de mesure pour la température de sortie ($T_o$) du fluide de refroidissement et à des générateurs de valeurs de mesure pour la puissance globale du cœur de réacteur (P), le débit total (W) du fluide de refroidissement primaire et la température d'entrée ($T_I$) du fluide de refroidissement;

c) le circuit d'estimation est relié, du côté sortie, à un dispositif de contrôle comportant un comparateur à valeur de consigne, qui contrôle si la température moyenne estimée ($T_f$) du combustible et/ou la température moyenne estimée ($T_c$) de l'agent de refroidissement présentent des écarts par rapport à des valeurs de consigne pouvant être prédéterminées et déclenche éventuellement des signalisations de défaut;

d) il est prévu un autre circuit d'estimation qui estime respectivement à nouveau les matrices de paramètres ($\Phi$, $\Gamma$) à partir des valeurs de mesure et, en cas de besoin, introduit ces matrices dans le premier circuit d'estimation;

e) au moins le premier circuit de mesure contient un filtre Kalman et établit les formules de récurrence suivantes selon:

$$\hat{X}_{k+1}^{k+1} = \Phi \, \hat{X}_k^k + \Gamma \, u_k + K_{k+1} \, (Y_{k+1} - H \, \hat{X}_{k+1}^k - D \, u_{k+1})$$

avec

$$\hat{X} = \begin{pmatrix} \hat{T}_f \\ T_c \end{pmatrix} = \text{vecteur d'état estimé pour un élément combustible}$$

$$u = \begin{pmatrix} \delta P \\ \delta T_I \\ \delta W \end{pmatrix} = \begin{matrix} \text{grandeur d'entrée} \\ \text{(éventuellement} \\ \text{différentiée)} \end{matrix} \begin{pmatrix} \text{Puissance totale} \\ \text{Température du fluide de refroidissement} \\ \text{Débit total du fluide de refroidissement} \end{pmatrix}$$

$$Y = \delta T_o = \text{grandeur d'entrée (éventuellement différentiée) (température de sortie du fluide de refroidissement),}$$

$\Phi$, $\Gamma$, K, H, D désignant des matrices de paramètres et des indices k ou (k+1) permettant une association de la suite dans le temps, l'indice supérieur indiquant l'instant auquel des valeurs de mesure sont introduites dans la grandeur ainsi indicée, et l'indice inférieur indiquant l'instant pour lequel la grandeur indicée est valable.

4. Dispositif suivant la revendication 3, remarquable par les caractéristiques suivantes:

a) il est prévu un circuit de correction, qui est branché en aval du filtre Kalman;

b) les valeurs de mesure u et $\delta T_o$ sont envoyées en tant que grandeurs d'entrée au circuit de correction;

c) la valeur estimée $\delta \hat{T}_c$ délivrée par la sortie du filtre Kalman est présente en tant que grandeur d'entrée supplémentaire;

d) le circuit de correction établit la formule conformément à:

$$\delta \hat{T}_{f,\,COR}^{j-1} = \frac{1}{\Phi_{21}} \left[ \frac{1}{2} (Y_j - u_{2j}) - (\gamma_{21} \, u_{1,\,j-1} + \right.$$

$$\left. + \gamma_{22} \, u_{2,\,j-1} + \gamma_{23} \, u_{3,\,j-1}) - \Phi_{22} \, \delta \hat{T}_{c,\,j-1}^{j-1} \right]$$

5. Dispositif suivant la revendication 4, remarquable par les caractéristiques suivantes:

a) pour filtrer les grandeurs d'entrée (quasi-stationnaires)

$$u = \begin{pmatrix} u_1 \\ u_2 \\ u_3 \end{pmatrix} = \begin{pmatrix} \delta P \\ \delta T_I \\ \delta W \end{pmatrix}$$

il est prévu des filtres passe-bas ($TP_1$, $TP_2$, $TP_3$);

b) les constantes de temps ($\tau_1$, $\tau_2$, $\tau_3$) des filtres passe-bas ($TP_1$, $TP_2$, $TP_3$) sont grandes par rapport aux fréquences parasites et sont faibles par rapport aux durées nécessaires pour des décalages du point de fonctionnement.

6. Dispositif suivant la revendication 4 ou 5, remarquable par les caractéristiques suivantes:

a) pour filtrer la grandeur de sortie du circuit de correction $\delta \tilde{T}_{f,COR}$, il est prévu un filtre passe-bas ($TP_4$);

b) la constante de temps ($\tau_4$) du filtre passe-bas ($TP_4$) est de l'ordre de grandeur de 1 s et est limitée, vers le haut, par les constantes de temps introduites par la capacité calorifique du combustible.

7. Dispositif suivant la revendication 4, 5 ou 6, remarquable par les caractéristiques suivantes:

a) la grandeur $\frac{1}{2}(\delta T_o + \delta T_I)$, qui est formée à partir de valeurs de mesure, est présente en tant que grandeur d'entrée à la place de $\delta \tilde{T}_c$ délivrée par la sortie du filtre Kalman;

b) il est prévu un filtre passe-bas servant à filtrer $\frac{1}{2}(\delta T_c + \delta T_I)$.

FIG 1

FIG 2